# EUROPEAN PATENT APPLICATION

(11) **EP 1 950 100 A2**
(43) Date of publication of application: **30.07.2008**
(21) Application number: 07023929.8
(22) Date of filing: 11.12.2007
(51) Int. Cl.: B60R 21/09

(54) **Pedal unit for a motor vehicle**

(30) Priority: 23.01.2007 IT TO20070038
(71) Applicant: Ergom Automotive S.p.A., 10071 Borgaro Torinese (Torino) (IT)
(72) Inventor: Cimminelli, Francesco, 10121 Torino (IT); Giaccaria, Flavio, 10093 Collegno (Torino) (IT)
(74) Representative: Cian, Paolo

(57) **Abstract**

A pedal unit for a motor vehicle comprises a swinging pedal arm (12), a base element (30) which may swing together with the pedal arm (12) in order to control a device of the motor vehicle, and a lever control member (56) movable with respect to the pedal arm (12), having an appendage (68) adapted to interfere with a counter element of the motor vehicle as a result of an impact. The pedal arm (12) is rotatable about a first pin (24, 27) and has a front opening (20), the base element (30) has a pair of slots (36) for the engagement of the first pin (24, 27) and another pair of slots (38) in which a second pin (64) engages. The first pin (24, 27) and the second pin (64) engages also respective holes (60, 62) of the lever member (56). A rotation of the lever member (56) causes the pins (24, 27, 64) to slide in the respective slots (36, 38) and the base element (30) to move in a position facing the front opening (20), in which the pedal arm (12) may rotate with respect to the base element (30).

## Description

The present invention relates in general to pedals for controlling motor vehicles by a driver.

In the most common case, the pedals mounted on pedal units installed on motor vehicles, have a rigid structure which, in the event of an impact of the motor vehicle, such as a frontal impact, and of the resulting deformation of parts of the body thereof, may move back towards the passenger compartment and impair the safety of the lower limbs of the driver.

In order to avoid this problem, pedal units have been proposed having a deformable structure which allows at least a pedal arm to rotate freely or to be released and falling down as a result of an impact of the motor vehicle which involves the movement of a counter member connected with the body, with the aim of avoiding any interference of the pedal arm with the lower limbs of the driver.

More particularly, the present invention refers to a pedal unit of a motor vehicle, such as defined in the preamble of appended claim 1.

A pedal unit of the type mentioned above is known from US-A-2003/029 320. This known pedal unit comprises an elongated base element rotatably mounted about an axis of oscillation of the unit, which is connected with a control device of the motor vehicle.

In its turn, a pedal arm is articulated to the base element about a pin spaced from the axis of oscillation of the unit, in such a manner that the pedal arm may assume a first configuration in which it is substantially parallel to the base element, and a second configuration in which it is tilted with respect to the base element. This second configuration is reached following to the rotation of a lever control member of the unit, caused by the movement of a counter element of the motor vehicle, as a result of an impact of the motor vehicle, which interferes with an appendage of the control member. A pair of shaped slots are provided on the side faces of the control member, in which a slidable tubular hub of the base element is arranged. Moreover, locking means are provided in order to keep the control member fast with the pedal arm in the normal operation of the unit. These locking means, as a result of an impact of the motor vehicle and the consequent rotation of the lever control member, undergo a deformation in order to make free the movement of the lever control member and to disengage the pedal, so that the latter is allowed to assume the aforesaid configuration at an angle with respect to the elongated base member.

However, this known pedal unit has a generally complex structure that can turn out to be little reliable in the operation. In particular, the aforesaid locking means constitute a critical element of the unit, which is difficult and complex to be correctly dimensioned, and that, if not perfectly adjusted, may not allow the correct unlocking of the pedal arm in the event of an impact of the motor vehicle, or may cause the accidental releasing of the pedal arm as a result of a sharp braking.

In order to solve these drawbacks, the subject of the invention is a pedal unit having the features claimed.

By virtue of this idea of solution, the pedal unit of the invention has a structure which assure that the pedal arm may swing freely with respect to the unit as a result of an impact of a predetermined amount of the motor vehicle, in a fully safe and reliable manner.

Further characteristics of the invention will appear more clearly from the following detailed description, provided as a non-limitative example and referred to the appended drawings, in which:

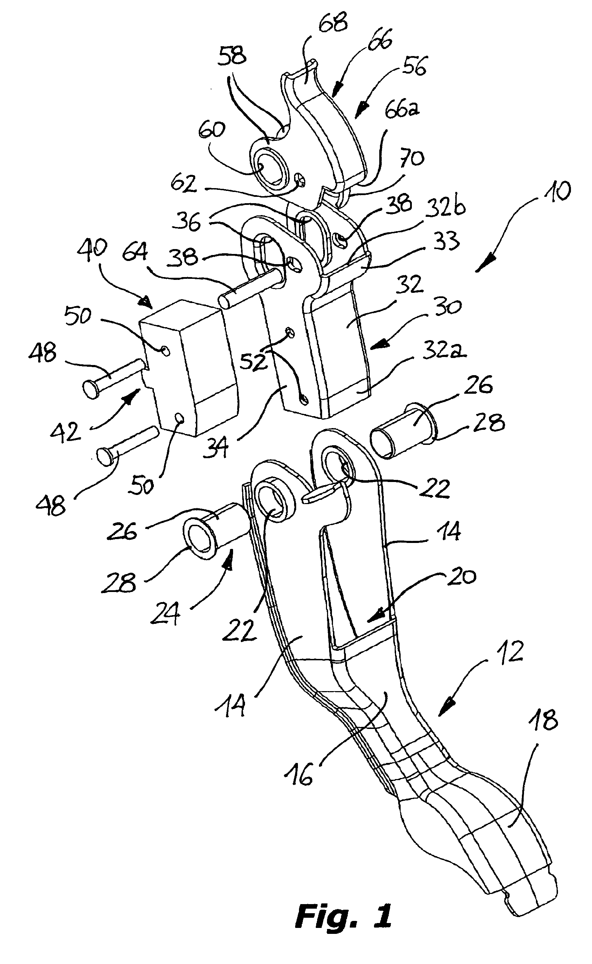

figure 1 is an exploded perspective view of the main elements of a pedal unit according to the invention,
figure 2 is a front elevational view of the unit of figure 1 in the assembled configuration,
figure 3 is a side elevational view of the unit from arrow III of figure 2,
figure 4 is a side elevational view sectioned along line IV-IV of figure 2,
figure 5 is a partial back elevational view, sectioned along line V-V of figure 4,
figure 6 is a partial top elevational view, sectioned along line VI-VI of figure 4,
figure 7 is a partial elevational view sectioned along line VII-VII of figure 4,
figures 8 and 9 are views similar to figure 4, showing different configurations of the pedal unit corresponding to several positions of a lever control member thereof, as a result of the interference with a counter element caused by an impact of the motor vehicle, and
figures 10 to 12 are perspective views similar to each other, corresponding to the configurations of the pedal unit shown in figures 4, 8 and 9, respectively.

With reference to the figures, a pedal unit is indicated in its whole by reference numeral 10. The unit 10 is adapted to be associated with a pedal unit of a type known per se, so as to be able to be used for controlling both a brake device or a clutch device of a motor vehicle.

The unit 10 comprises a pedal arm 12, having a general box structure with a substantially U-shaped cross-section defined by a pair of parallel wings 14, each of which consists of a respective elongated wall, and by a front wall 16 which connects the lower portions (with reference to the figures) of the wings 14 and ends at the lower end of the arm 12 with a control plate 18.

Between the wings 14, above the front wall 16, a front opening 20 is defined.

Below the opening 20, in the back portion of the arm 12, a pair of tabs 17 extend, perpendicular to the wings 14.

In the case of a pedal unit for controlling the brake of a motor vehicle, the arm 12 will be usually of metallic material, whereas in the case of a pedal unit for controlling the clutch of a motor vehicle, the arm 12 will be conveniently made of plastic material.

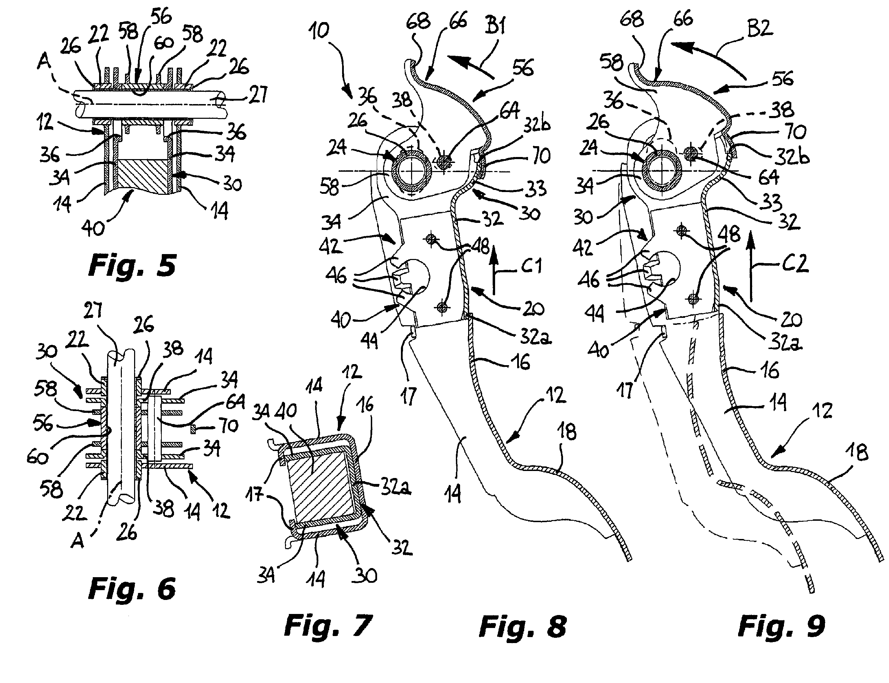

The wings 14, at the respective upper ends, have a pair of coaxial bushes 22, each of which define a hole for inserting an articulation pin of the arm 12, generally indicated 24, having an axis A. A respective sleeve 26, having an end collar 28, is inserted in each bush 22, the two sleeves 26 being arranged in frontal abutment so as to constitute together a tubular duct for the insertion of a rod 27 coaxial with the axis A (figures 5 and 6).

A base element 30, having also a general box shape and a substantially U-shaped cross-section, is received in the space between the wings 14, close to the opening 20. The element 30 comprises a shaped front wall 32 which faces the opening 20, interposed between a pair of parallel sidewalls 34, having a lower portion 32a and an upper end 32b. In particular, in the normal operational condition of the unit 10, the lower portion of the element 30 is contained in the space delimited frontally by the upper portion of the wall 16 of the arm 12, sideways by the wings 14 and at the back by the tabs 17 (see figure 7).

A first slot 36, having an elongated shape and extending along a direction parallel to the extension of the walls 34, as well as a second slot 38, smaller than the slot 36 and directed according to a direction substantially transverse to the respective slot 36, are formed in each wall 34. The pair of slots 36 and 38 are formed symmetrically in the walls 34 of the element 30, in such a manner to be respectively coaxial.

The sleeves 26 of the pin 24 are slidably engaged in the two slots 36, in such a manner that the two sleeves 26 may move together between a raised position in which they rest against the upper edges of the slots 36, and a lowered position in which they rest against the lower edges of such slots.

A body 40, for example made of a molded plastic material, is fastened to the element 30 between the walls 34 by means of a pair of transverse pins 48 inserted into corresponding holes 50 formed in the body 40 and engaging two pair of through holes 52 of the sidewalls 34 of the element 30. The body 40 is provided with a coupling formation 42 in order to allow to connect a control member (not shown) making part of a control device of the motor vehicle, such as a clutch or a brake device. For example, in the case in which the pedal unit 10 is used for controlling a brake device, the body 40 could be provided with a snap coupling formation including a spherical hollow seat 44 adapted for engaging a terminal member having a corresponding shape of a servo-brake push-rod, and delimited outwardly by four radial elastically deformable tongues 46.

A lever control member 56 is associated with the upper portion of the element 30, in a position interposed between the sidewalls 34. The member 56 comprises a pair of parallel sidewalls 58 between which a tubular portion 60 extends, in which the sleeves 26 of the pin 24 are rotatably received. Respective coaxial through holes 62 are formed in the walls 58, sideways to the axial ends of the tubular portion 60, in which a cylindrical pin 64 is inserted, whose opposite ends engage the slots 38 of the element 30, respectively. In particular, the pin 64 may move between an advanced position in which its ends rest against the front edges of the slots 38, and a retracted position in which its ends rest against the back edges of such slots.

The member 56 comprises a front wall 66 which defines an upper appendage 68 and ends at the bottom with an end edge 66a. The appendage 68 is intended to interfere with a counter element (not shown) of the motor vehicle on which the unit 10 is mounted, such as a bar or a transverse beam fixed to the structure of the motor vehicle and extending below the dashboard, intended to undergo a movement towards the front portion of the motor vehicle as a result of an enough violent impact of the motor vehicle, particularly of a frontal impact.

Preferably, a tongue 70 having an arched shape corresponding to that of an upper portion 33 of the front wall 32 of the element 30, extends downwardly from the lower edge 66a of the front wall 66 of the member 56, in such a manner that the sliding contact of the tongue 70 on the outer surface of the portion 33 constitutes a guide for the rotational movement of the control member 56 with respect to the base element 30.

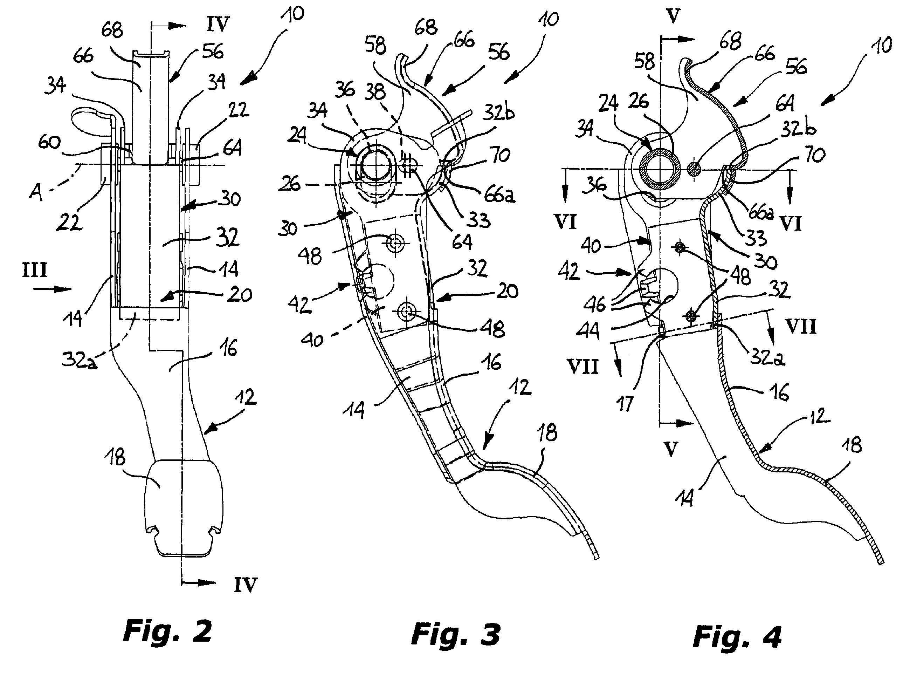

In the normal operation of the unit 10 (figures 2, 3, 4 and 10), the lower edge 66a of the front wall 66 of the control member 56 rests on the upper end 32b of the front wall 32 of the element 30. In this configuration, the sleeves 26 of the pin 24 are in their raised position, resting against the upper edges of the slots 36, and the pin 64 is in its advanced position in which its ends rest against the front edges of the slots 38. Still in this configuration, the lower end 32a of the front wall 32 of the element 30 is arranged behind the upper end of the front wall 16 of the arm 12, a portion of the wall 16 being superimposed to the end 32a, and the tabs 17 engage a back and lower portion of the element 30. By virtue of such a superimposition, a thrust applied on the control plate 18 of the arm 12 causes a rotation of the arm 12 and, owing to the interference of the wall 16 with the wall 32, a corresponding rotation of the element 30 about the pin 24.

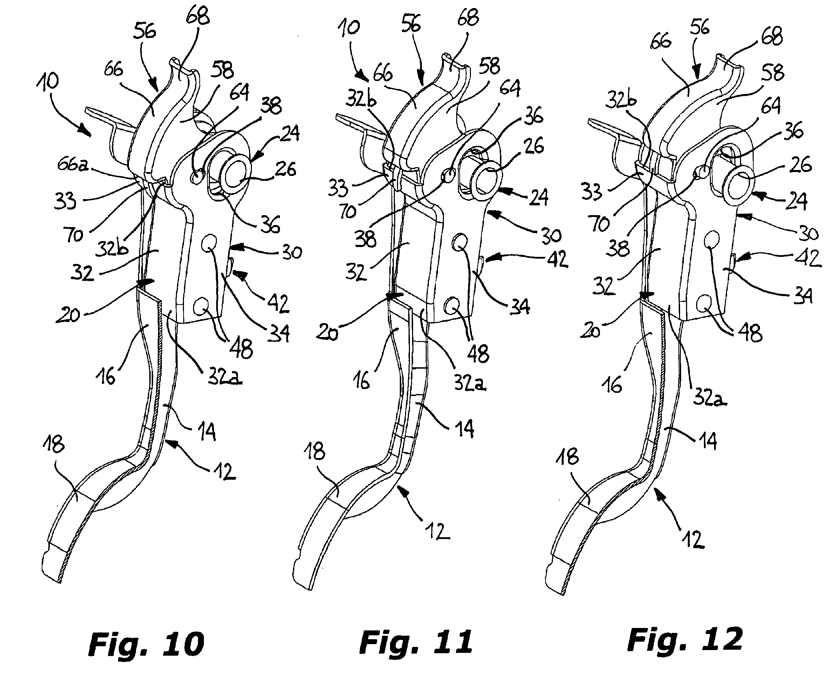

When the control member 56 undergoes a rotation in the direction indicated by arrows B1 and B2 of figures 8 and 9, as a result of the interference of its appendage 68 with the aforesaid counter element of the motor vehicle, which has moved towards the front portion of the motor vehicle owing to an impact of enough amount, the rotation of the control member 56 causes the pin 64 to move back (figures 8 and 11) until the ends thereof abut against the back edges of the slots 38 (figures 9 and 12), and simultaneously the sleeves 26 of the pin 24 slide along the slots 36 until their lowered position, in which they rest against the lower edges of the slots 36, is reached.

Since the extension of the slots 36 is slightly greater than the vertical extension of the portion of the wall 16 which is superimposed to the wall 32 of the element 30 in the normal working of the unit 10, the movement of the sleeves 26 of the pin 24 between the opposite end edges of the slots 36 causes the element 30 to be raised with respect to the pedal arm 12 (indicated by arrows C1 and C2 of figures 8 and 9), until the lower end 32a is brought in a position which faces completely the front opening 20 of the arm 12. In this configuration, in which there is not more any superimposition of the front wall 16 of arm 12 with respect to the front wall 32 of the element 30, and the lower portion of the element 30 is disengaged from the contact with the tabs 17, a thrust applied on the control plate 18 of the arm 12 causes the movement of the arm 12 only, which may rotate freely about the pin 24 without any interference with the element 30 (hatched position in figure 9).

## Claims

1. Pedal unit for a motor vehicle, comprising:
- a pedal arm (12) swingably mounted about an axis of oscillation (A),
- a base element (30) adapted to swing together with the pedal arm (12) in order to allow to control the movement of a control device of the motor vehicle associated with it through connection means (42),
- a lever control member (56) adapted to move independently with respect to the pedal arm (12) and including an appendage (68) adapted to interfere with a counter element of the motor vehicle as a result of a movement thereof caused by an impact of the motor vehicle,
**characterized in that** the pedal arm (12) is articulated about a first pin (24, 27) which defines said axis of oscillation (A), and has a front opening (20) which extends below said first pin (24, 27), **in that** the base element (30) has a first pair of slots (36) in which the first pin (24, 27) is slidably engaged, and a second pair of slots (38) directed in a direction generally transverse with respect to the slots of said first pair of slots (36) and in which a second pin (64) parallel to the first pin (24, 27) is slidably engaged, and **in that** a first through hole (60) in which the first pin (24, 27) is engaged, and a second through hole (62) crossed by the second pin (64), are provided in the lever control member (56), such through holes (60, 62) being arranged in such a manner that a rotation of the lever control member (56) is adapted to cause said pins (24, 27, 64) to slide in the respective slots (36, 38) in order to cause a movement of the base element (30) with respect to the first pin (24, 27), and therefore with respect to the pedal arm (12), such as to bring the base element (30) in a position in which it faces completely the opening (20) of the pedal arm (12), whereby the pedal arm (12) may rotate freely with respect to the base element (30).

2. Pedal unit according to claim 1, **characterized in that** the pedal arm (12) has a box structure with a U-shaped cross-section, which comprises a pair of substantially parallel side wings (14) an upper portion of which delimits said front opening (20) sideways, and **in that** such lateral wings (14) are connected to each other by a front wall (16), below said front opening (20).

3. Pedal unit according to claim 1 or 2, **characterized in that** said first pin (24) comprises a pair of coaxial sleeves (26) arranged in frontal abutment.

4. Pedal unit according to any one of claims 1 to 3, **characterized in that** said connection means (42) of the control device of the motor vehicle are formed in an auxiliary body (40) fixed to the base element (30).

5. Pedal unit according to claim 4, **characterized in that** said auxiliary body (40) comprises a snap coupling formation (44, 46) adapted to allow the connection of said control device.

6. Pedal unit according to any one of claims 1 to 5, **characterized in that** the lever control member (56) comprises an arched tongue (70) which extends towards the base element (30) and is adapted to slide on a corresponding arched surface of an upper portion (33) of the base element (30), in order to guide the rotation of the lever control member (56) with respect to the base element (30).

7. Motor vehicle **characterized in that** it comprises at least a pedal unit (10) according to any one of claims 1 to 6.
